# EUROPEAN PATENT APPLICATION

(11) **EP 4 246 078 A1**
(43) Date of publication of application: **20.09.2023**
(21) Application number: 23151419.1
(22) Date of filing: 12.01.2023
(51) Int. Cl.: F28D 15/02, G01K 17/08

(54) **PERFORMANCE TESTING DEVICE FOR HEAT PIPE HEATSINK**

(30) Priority: 11.03.2022 CN 202220555420 U
(71) Applicant: Sungrow Power Supply Co., Ltd., Hefei, Anhui 230088 (CN)
(72) Inventor: YU, Renbin, Hefei, Anhui (CN); YANG, Yu, Hefei, Anhui (CN)
(74) Representative: Zacco Norway AS

(57) **Abstract**

A performance testing device for heat pipe heatsink is provided according to the present application, including a heating simulation assembly, first temperature sensors and second temperature sensors, the heating simulation assembly is used to simulate heating generation of a heating element and has a heat conduction end face fitted to and transfer heat with the evaporation pipe sections of heat pipes of the heat pipe heatsink; the first temperature sensors are used to detect the temperature of the heat conduction end face, and the first temperature sensors are arranged in one-to-one correspondence with the evaporation pipe sections of the heat pipes; the second temperature sensors are arranged at condensing pipe sections of the heat pipes. In the performance testing device, each heat pipe of the heat pipe heatsink is provided with a corresponding first temperature sensor and a corresponding second temperature sensor, the quality of each heat pipe of the heat pipe heatsink can be judged, which makes the heat dissipation performance test of heat pipe heatsink more accurate, thereby ensuring the heat dissipation performance of the qualified heat pipe heatsink manufactured by the factory, and effectively avoiding the defective heat pipe heatsinks from leaving the factory.

## Description

### FIELD

The present application relates to the technical field of testing equipment, and in particular to a performance testing device for a heat pipe heatsink.

### BACKGROUND

Grooves are formed on a heatsink substrate first, then heat pipes are fixed in the grooves by tin soldering, adhesive bonding or direct tight fitting, and the heat pipes are closely combined with the heatsink substrate to form a heat pipe heatsink. Pipe rolling is required during the process that the heat pipe is embedded into the heatsink substrate, to make the heat pipe be pressed into a semi-circular arc shape, to tightly fit with the groove, and form a plane on the upper surface of the heatsink substrate, to fit with the heat dissipation module. The internal capillarity of the heat pipe may be damaged due to deformation in the process of pipe rolling, and the heat pipe may not fit closely with the groove when being pressed; during the processing of finned heatsink, changes of fin size, spacing of fins and substrate thickness may lead to change of heat dissipation performance of the heat pipe heatsink. Therefore, thermal performance testing is required to be performed to a finished heat pipe heatsink before leaving the factory, to screen the products, so as to prevent defective products from leaving the factory.

The conventional thermal performance testing method for heat pipe heatsink is to place a heating rod in a heating block, the heating block is attached to the heat pipe heatsink through the interface material, an appropriate heating power is set for heating, and the heatsink is cooled by natural-cooling or air-cooling, after the temperature is stabilized, testing the temperature of the lower surface of the heating block, and observing whether the temperature of the heating block is within a reasonable range, to screen the defective heatsink products.

The above conventional thermal testing method can only test whether the thermal performance of the overall heat pipe heatsink meets the requirements, and the heat dissipation of each heat pipe cannot be detected, the accuracy of heat dissipation performance test of the heat pipe heatsink is poor, which easily leads to defective heat pipe heatsinks leaving the factory.

From the above, a problem to be addressed by those skilled in the art is that the defective heat pipe heatsinks may leave the factory due to inaccurate heat dissipation performance testing of heat pipe heatsinks.

### SUMMARY

In view of this, a performance testing device for heat pipe heatsink is provided according to the present application, to solve the problem that the defective heat pipe heatsinks may leave the factory due to inaccurate heat dissipation performance testing of heat pipe heatsinks.

To achieve the above object, the following technical solutions are provided according to the present application.

A performance testing device for heat pipe heatsink, including:
a heating simulation assembly configured to simulate heat generation of a heating element, where the heating simulation assembly has a heat conduction end face configured to be fitted to and transfer heat with evaporation pipe sections of heat pipes of the heat pipe heatsink;
first temperature sensors for configured to detect a temperature of the heat conduction end face, where the first temperature sensors are arranged in one-to-one correspondence with the evaporation pipe sections of the heat pipes; and
second temperature sensors, where the second temperature sensors are arranged at condensing pipe sections of the heat pipes.

In an embodiment, the heating simulation assembly includes a heating block and heating rods embedded in the heating block, a side of the heating block configured to be fitted to and transfer heat with the evaporation pipe sections forms the heat conduction end face, and the heating rods are configured to heat the heating block, so that the heating block can simulate the heat generation of the heating element.

In an embodiment, a thermal interface material coating is formed in an embedding gap between each of the heating rods and the heating block.

In an embodiment, the heating rods and the evaporation pipe sections of the heat pipes are in one-to-one correspondence and arranged in parallel.

In an embodiment, each of the first temperature sensors is embedded in the heating block and located between the corresponding heating rod and the heat conduction end face.

In an embodiment, the heating block is of an integrated structure and is configured to match the size of the heating element, and a heat insulation structure is provided between each two adjacent heating rods.

In an embodiment, the heat insulation structure is a heat insulation groove or a heat insulation material layer.

In an embodiment, the heating block is of a split-type structure, the heating block includes sub-heating blocks arranged in one-to-one correspondence with the evaporation pipe sections, the heating rods are arranged in the corresponding sub-heating blocks, a preset heat insulation gap is kept between each two adjacent sub-heating blocks.

In an embodiment, the heat conduction end face and/or a heat pipe mounting end face of the heat pipe heatsink is provided with a thermal interface material coating.

In an embodiment, the performance testing device further includes an air-cooling simulation system for simulating an air-cooling environment of the heat pipe heatsink.

In an embodiment, the air-cooling simulation system includes a fan and an air duct cavity for blowing cold airflow from the fan to the heat pipe heatsink; or, the air-cooling simulation system is an air tunnel for providing cold airflow to the heat pipe heatsink.

In an embodiment, each of the evaporation pipe sections is located at a middle of the corresponding heat pipe, each of the condensing pipe sections is located at each of two ends of the heat pipe, and each of the second temperature sensors is arranged at a preset distance from the corresponding end of the heat pipe.

Compare with the background technology, the performance testing device for the heat pipe heatsink includes the heating simulation assembly, the first temperature sensors and the second temperature sensors, where the heating simulation assembly is used to simulate the heating of a heating element and has a heat conduction end face, the heat conduction end face is used to be fitted to and transfer heat with the evaporation pipe sections of heat pipes of the heat pipe heatsink; the first temperature sensors are used to detect a temperature of the heat conduction end face, and the first temperature sensors are arranged in one-to-one correspondence with the evaporation pipe sections of the heat pipes; the second temperature sensors are arranged at condensing pipe sections of the heat pipes. In practical application, the performance testing device simulates the heating condition of the heating element through the heating simulation assembly, detects the temperature value of a position of the heat conduction end face corresponding to the evaporation pipe section of each heat pipe through the corresponding first temperature sensor, and detects the temperature value of the condensing pipe section of each heat pipe through the corresponding second temperature sensor. In a case that one of the heat pipes of the heat pipe heatsink fails (or be defective), the heat generated by the heat conduction end face cannot be quickly transferred to the outside through the evaporation pipe section and the condensing pipe sections of the heat pipe, resulting in rising of the temperature value detected by the first temperature sensor corresponding to the heat pipe, and falling of the temperature value detected by the second temperature sensors corresponding to the heat pipe, the detected temperature difference between the first temperature sensor and the second temperature sensor increases, according to the above characteristic, the judgment standard of qualified and defective products can be set by testing the qualified and defective heat pipe heatsinks, and obtaining the threshold value of each temperature. The judgment standard of qualified heat pipe can be set as follows: in a case that the temperature value detected by the first temperature sensor is less than a first preset temperature value, the temperature value detected by the second temperature sensor is greater than a second preset temperature value, and the temperature difference between temperatures detected by the first temperature sensor and the second temperature sensor is less than a preset temperature difference value, it can be determined that the heat pipe meets the qualified product standard. More importantly, as each heat pipe of the heat pipe heatsink is provided with the corresponding first temperature sensor and second temperature sensor, the quality of each heat pipe of the heat pipe heatsink can be judged, leading to more accurate heat dissipation performance test of heat pipe heatsink, which can better ensure the heat dissipation performance of the qualified heat pipe heatsinks leaving the factory, and thereby effectively avoiding the defective heat pipe heatsinks from leaving the factory.

### BRIEF DESCRIPTION OF THE DRAWINGS

For more clearly illustrating the technical solutions in the embodiments of the present application or the conventional technology, drawings referred to for describing the embodiments or the conventional technology will be briefly described hereinafter. Apparently, drawings in the following description are only some examples of the present application, and for those skilled in the art, other drawings may be obtained based on the provided drawings without any creative efforts.
FIG. 1 is a three-dimensional schematic view showing the overall structure of a performance testing device for a heat pipe heatsink according to an embodiment of the present application;
FIG. 2 is a partial three-dimensional structural view of a heating simulation assembly being fitted to the heat pipe heatsink according to the embodiment of the present application;
FIG. 3 is a partial front cross-sectional view of the heating simulation assembly being fitted to the heat pipe heatsink according to the embodiment of the present application;
FIG. 4 is a partial left cross-sectional view of the heating simulation assembly being fitted to the heat pipe heatsink according to the embodiment of the present application;
FIG. 5 is a partial three-dimensional structural schematic view showing another heating simulation assembly being fitted to the heat pipe heatsink according to another embodiment of the present application;
FIG. 6 is a partial front cross-sectional view of the another heating simulation assembly being fitted to the heat pipe heatsink according to the another embodiment of the present application;
FIG. 7 is a partial three-dimensional structural schematic diagram of yet another heating simulation assembly being fitted to the heat pipe heatsink according to yet another embodiment of the present application; and
FIG. 8 is a partial front cross-sectional view of the yet another heating simulation assembly being fitted to the heat pipe heatsink according to the yet another embodiment of the present application.

**Reference numerals:**

| | | | |
|---|---|---|---|
| 1 | heat pipe heatsink, | 2 | substrate, |
| 3 | radiating fin, | 4 | heat pipe groove, |
| 5 | heat pipe, | 6 | second temperature sensor, |
| 7 | heating block, | 8 | heating rod, |
| 9 | first temperature sensor, | 10 | heat insulation groove, |
| 11 | fan, | 12 | air duct cavity. |

### DETAILED DESCRIPTION OF THE EMBODIMENTS

A core of the present application is to provide a performance testing device for heat pipe heatsink, to solve the problem that the defective heat pipe heatsinks may leave the factory due to inaccurate heat dissipation performance testing of heat pipe heatsinks.

The technical solutions in the embodiments of the present application will be described clearly and completely as follows in conjunction with the drawings in the embodiments of the present application. It is apparent that the described embodiments are only a part of the embodiments according to the present application, rather than all of the embodiments. Based on the embodiments in the present disclosure, all of other embodiments, made by the person skilled in the art without any creative efforts, fall into the scope of protection of the present disclosure.

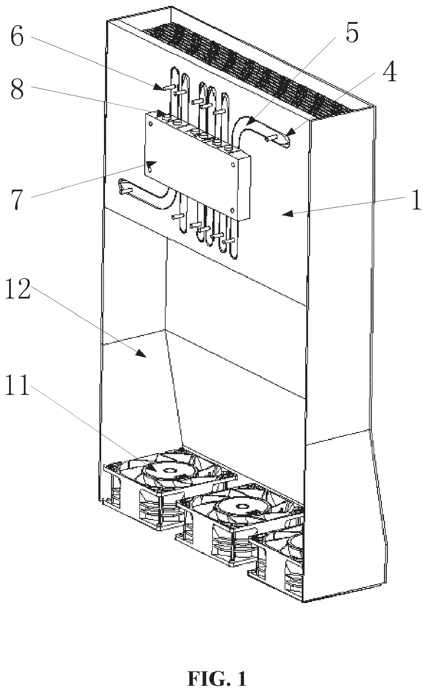

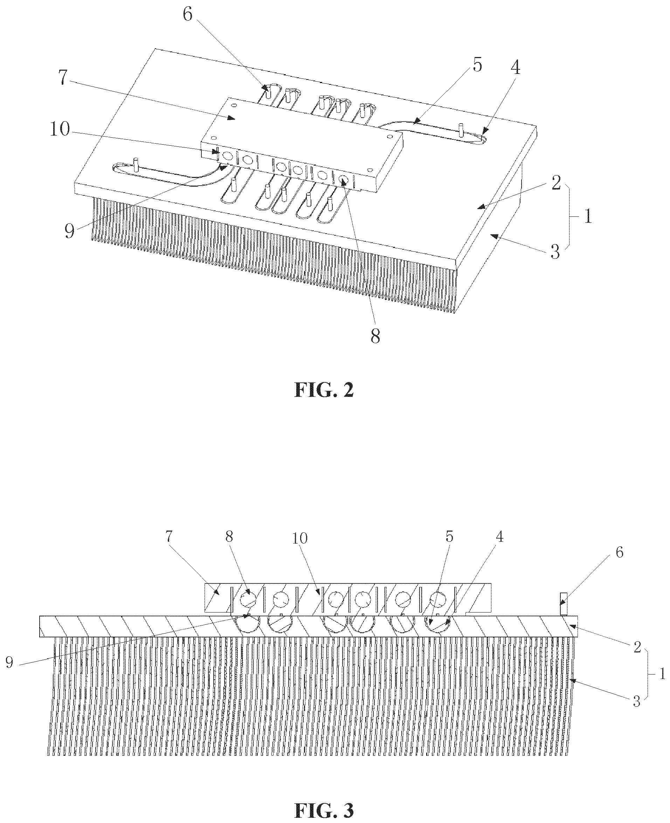

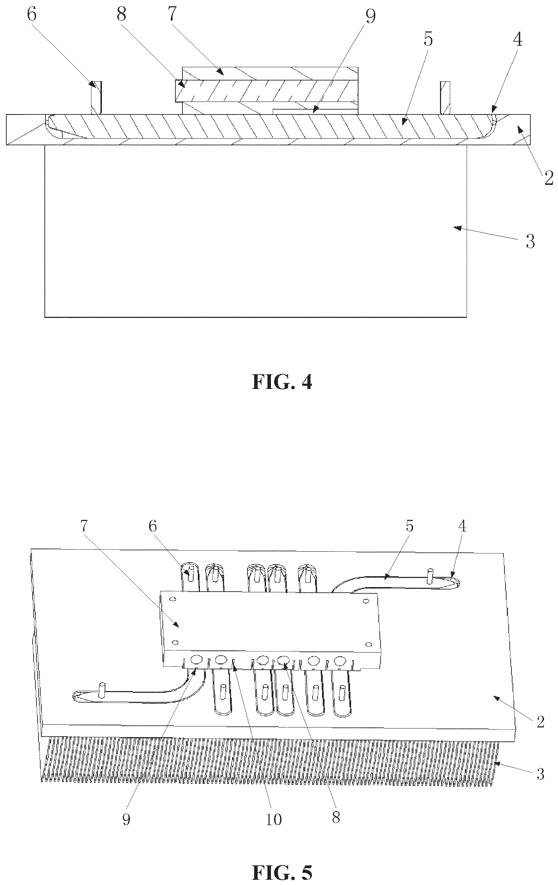

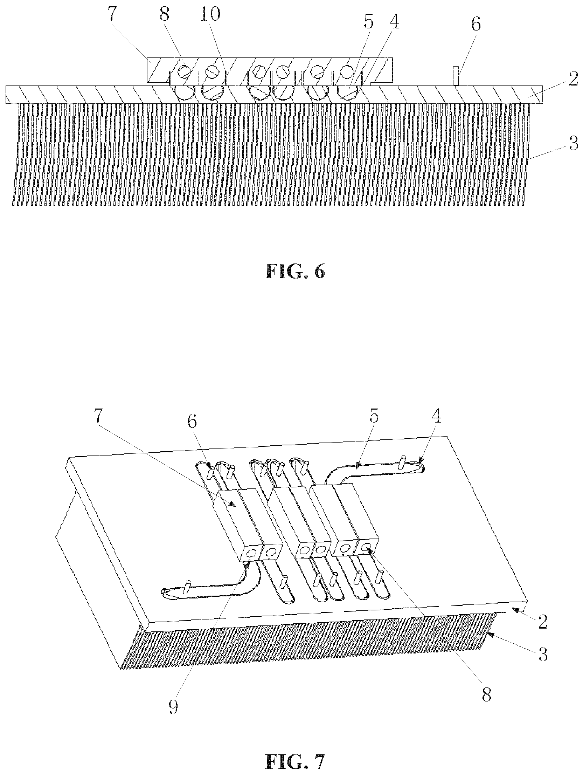

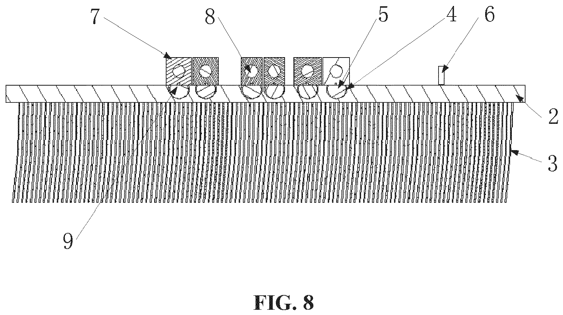

Referring to FIG. 1 to FIG. 8, a performance testing device for heat pipe heatsink is provided according to an embodiment of the present application, including a heating simulation assembly, first temperature sensors 9 and second temperature sensors 6, where the heating simulation assembly is used to simulate heating generation of a heating element and has a heat conduction end face, the heat conduction end face is used to be fitted to and transfer heat with evaporation pipe sections of heat pipes 5 of the heat pipe heatsink 1; the first temperature sensors 9 are used to detect temperatures of the heat conduction end face, and the first temperature sensors 9 are arranged in one-to-one correspondence with the evaporation pipe sections of the heat pipes 5; the second temperature sensors 6 are arranged at condensing pipe sections of the heat pipes 5.

In practical application, the performance testing device simulates the heating condition of the heating element through the heating simulation assembly, detects the temperature value of a position of the heat conduction end face corresponding to the evaporation pipe section of each heat pipe 5 through the corresponding first temperature sensor 9, and detects the temperature value of the condensing pipe section of each heat pipe 5 through the corresponding second temperature sensor 6. In a case that one of the heat pipes 5 of the heat pipe heatsink 1 fails (or be defective), the heat generated by the heat conduction end face cannot be quickly transferred to the outside through the evaporation pipe section and the condensing pipe sections of the heat pipe 5, resulting in rising of the temperature value detected by the first temperature sensor 9 corresponding to the heat pipe 5, and falling of the temperature value detected by the second temperature sensors 6 corresponding to the heat pipe 5, the detected temperature difference between the first temperature sensor 9 and the second temperature sensor 5 increases, according to the above e characteristic, the judgment standard of qualified and defective products can be set by testing the qualified and defective heat pipe heatsinks, and obtaining the threshold value of each temperature. The judgment standard of qualified heat pipe 5 can be set as follows: in a case that the temperature value detected by the first temperature sensor 9 is less than a first preset temperature value, the temperature value detected by the second temperature sensor 6 is greater than a second preset temperature value, and the temperature difference between temperatures detected by the first temperature sensor 9 and the second temperature sensor 6 is less than a preset temperature difference value, it can be determined that the heat pipe 5 meets the qualified product standard. More importantly, as each heat pipe 5 of the heat pipe heatsink 1 is provided with the corresponding first temperature sensor 9 and second temperature sensor 6, the quality of each heat pipe 5 of the heat pipe heatsink 1 can be judged, leading to more accurate heat dissipation performance test of heat pipe heatsinks 1, which can better ensure the heat dissipation performance of the qualified heat pipe heatsink 1 leaving the factory, and thereby effectively avoiding the defective heat pipe heatsinks a from leaving the factory.

It should be noted that the first temperature sensors 9 and the second temperature sensors 6 may specifically employ thermocouples connected to corresponding control circuits, by employing the thermocouples, the test result is closer to the real temperature value and the cost is lower. Of course, it can be understood that the structural form of other temperature sensors commonly used by those skilled in the art can also be used, which is not specifically limited herein.

In addition, for those skilled in the art to better understand the structure and working principle of the heat pipe heatsink 1, the structure and working principle of the heat pipe heatsink are briefly illustrated as follows.

Generally speaking, the heat pipe heatsink 1 (e.g., an aluminum-based heatsink) may include two parts, namely, a substrate 2 and radiating fins 3. A heat pipe groove 4 is provided on the substrate 2, the heat pipe 5 is embedded in the heat pipe groove 4, and the heat pipe 5 is pressed by pipe rolling, the heat pipe 5 and the substrate 2 are tightly combined by tin soldering, adhesive bonding or direct tight fitting, then the surface of the heat pipe 5 and the surface of the substrate 2 are ensured to be in the same plane by CNC, and finally the heat pipe heatsink is formed. The specific working principle of the heat pipe heatsink 1 is as follows. Taking a situation that the heat pipes 5 are horizontally arranged in a working state of the heat pipe heatsink 1 as an example, a middle section of the heat pipe 5 serves as the evaporation pipe section and is connected with the heat conduction end face of the heating simulation assembly in a heat transfer manner, the medium in the evaporation pipe section absorbs heat to be evaporated and moves to the condensation pipe sections at both ends of the heat pipe 5, after being cooled and condensed in the condensing pipe sections, the medium flows back to the evaporation pipe section to form a heat dissipation cycle.

In some specific embodiments, the heating simulation assembly includes a heating block 7 and heating rods 8 embedded in the heating block 7, a side of the heating block 7 configured to be fitted to and transfer heat with the evaporation pipe sections forms the heat conduction end face, and the heating rods 8 are configured to heat the heating block 7, so that the heating block 7 can simulate the heating generation of the heating element. The above structure of the heating simulation assembly not only makes the structure simple and easy to manufacture, but also makes it convenient to control the heating amount of the heating simulation assembly. Of course, it can be understood that the above structure of the heating simulation assembly is only an example of the embodiment of the present application, in the actual application, other structures of heating simulation assembly commonly used by those skilled in the art can also be used, as long as the heating condition of the heating element can be realized. For example, a certain heating element in the working state in the actual application scene can be used as the heating simulation assembly. In the actual application, the heating simulation assembly can be selected according to actual requirements. In addition, it should be noted that the structural form of the heating rod 8 is only an example of the structure of a heater of the present application, in the actual application, heaters with other structural forms can also be employed to heat the heating block, which is not specifically limited here.

In some specific embodiments, a thermal interface material coating may be formed in an embedding gap between the heating rod 8 and the heating block 7. By providing the thermal interface material coating, the heat conduction efficiency between the heating rod 8 and the heating block 7 can be improved, and the heating block 7 can better simulate the heating condition of the heating element. It should be noted that, the thermal interface material coating may specifically be a heat conductive silica gel layer, by providing the heat conductive silica gel layer, not only the heat conduction efficiency between the heating rod 8 and the heating block 7 can be ensured, but also the stability of the fixing of the heating rod 8 and the heating block 7 can be maintained. Of course, it can be understood that in the actual application, other thermal interface material coatings well known to those skilled in the art may also be used, which are not specifically limited here.

In some specific embodiments, the heating rods 8 and the evaporation pipe sections of the heat pipes 5 may be provided in a one-to-one correspondence and arranged side by side in parallel. With this arrangement, the heat generated by the heating rod 8 can be transferred to the heat pipe 5 as much as possible, thereby the distribution of heating power and loss of the actual heating assembly.

In some more specific embodiments, the first temperature sensor 9 may be arranged to be embedded in the heating block 7 and located between the corresponding heating rod 8 and the heat conduction end face. With this structural form, the temperature value detected by the first temperature sensor 9 is closer to the actual temperature of the heat conduction end face. Of course, it can be understood that, the manner of embedding the first temperature sensor 9 in the heating block 7 is only an example of the embodiment of the present application. In actual application, other arrangements commonly used by those skilled in the art can also be adopted. For example, with the manner that the first temperature sensor is directly embedded in the surface of the heat conduction end face and flush with the surface of the heat conduction end face, the temperature value of the heat conduction end face can also be obtained. In the actual application, the arrangement manner can be selected according to the actual needs, which is not specifically limited herein.

In some specific embodiments, in order to make the heating block 7 better simulate the real working condition of the heating element, the heating block 7 may be designed to have an integrated structure matching the size of the heating element to be simulated. In addition, in order to avoid mutual interference between the detection results of two adjacent heat pipes 5, a heat insulation structure is arranged between two adjacent heating rods 8, with this arrangement, heat of each heating rod 8 is isolated from other heating rods, and thus the heat can be prevented from diffusing in a horizontal direction of the heating block 7, which ensures that the temperature of the first temperature sensor 9 can truly reflect whether the heat pipe 5 under it is defective.

In a further embodiment, the above heat insulation structure may be specifically designed to be a structural form of a heat insulation groove 10. For example, the heat insulation groove may be provided by performing wire cutting at a position, between two adjacent heating rods 8, of the heating block 7. For another example, the heat insulation groove may be provided at a position, between two adjacent heating rods 8, of the heating block 7 through CNC. In the actual application, the processing method of the corresponding heat insulation groove may be selected according to the actual needs, which is not specifically limited herein.

Of course, it can be understood that the heat insulation structure employing the structural form of the heat insulation groove 10 is only an example of the embodiment of the present application. In the actual applications, other heat insulation structures commonly used by those skilled in the art may also be employed, for example, a layer of heat insulation material may be arranged between two adjacent heating rods 8 on the heating block 7, which is not specifically limited herein.

In some more specific embodiments, the heating block 7 may also be provided in a split-type structure, specifically, the heating block 7 may include sub-heating blocks arranged in one-to-one correspondence with the evaporation pipe sections, the heating rod 8 is arranged in the corresponding sub-heating block thereof, and a preset heat insulation gap is kept between two adjacent sub-heating blocks. In this way, the heat interference between the heating rods 8 can be avoided by isolation, and the mutually independent sub-heating blocks may also be placed at the positions to be heated and processed into the required sizes according to the requirements.

In some specific embodiments, the heat conduction end face may be provided with a thermal interface material coating, or a heat pipe mounting end face of the heat pipe heatsink 1 may be provided with a thermal interface material coating, or both the heat conduction end face and the heat pipe mounting end face of the heat pipe heatsink 1 are coated with thermal interface material coating. With the above structure, the heat transfer efficiency between the heat conduction end face and the heat pipe mounting end face of the heat pipe heatsink 1 can be effectively improved, and thus the detection results can be more accurate. It should be noted that, the thermal interface material coating may specifically employ a heat conductive silica gel layer, with the heat conductive silica gel layer, not only the heat conduction efficiency between the heat conduction end face and the heat pipe mounting end face can be ensured, but also the stability of the connection between the heating simulation assembly and the heat pipe heatsink 1 can be maintained. Of course, it can be understood that in the actual application, other thermal interface material coatings well known to those skilled in the art may also be used, which are not specifically limited herein.

In some more specific embodiments, the above performance testing device may further include an air-cooling simulation system for simulating the air-cooling environment of the heat pipe heatsink 1. With the air-cooling simulation system, when the heat pipe heatsink in actual use has an air-cooling system, the actual working condition of the heat pipe heatsink can be better simulated by opening the air-cooling simulation system; when the actual working condition of the heat pipe heatsink 1 is natural-cooling, the air-cooling simulation system may not be turned on. The air-cooling simulation system can better simulate the actual working condition of the heat pipe heatsink, which makes the final detection results more accurate.

In a further embodiment, the above air-cooling simulation system may specifically include a fan 11 and an air duct cavity 12 for blowing the cold air from the fan 11 to the heat pipe heatsink 1; or, the cold airflow is directly supplied to the heat pipe heatsink 1 through an air tunnel. In the actual application, the structural form can be selected according to the actual needs, which is not specifically limited herein.

In some more specific embodiments, the evaporation pipe section is located at a middle of the heat pipe 5, the condensing pipe section is located at each of two ends of the heat pipe 5, and the second temperature sensor 6 is arranged at a preset distance from the corresponding end of the heat pipe 5. The reason for providing the second temperature sensor 6 at the above position is that, the two ends of heat pipe 5 usually do not fit with the groove surface of heat pipe groove 4 provided on the substrate 2 of heat pipe heatsink 1, which are generally considered as invalid ends, in order to enable the second temperature sensor 6 to truly feedback the heat dissipation of the heat pipe heatsink 1, the second temperature sensor 6 is arranged at a preset distance from the corresponding end of the heat pipe 5, where the preset distance is generally 20 mm to 30 mm.

For those skilled in the art to better understand the performance testing device according to the present application, the test process of the heat pipe heatsink with air-cooling simulation system is illustrated hereinafter.

The specific test process is as follows: a required air volume is given by turning on the fan 11, or directly using the air tunnel; the first temperature sensor 9 (specifically a thermocouple of a corresponding model) is embedded at a lower position of the heating block 7, fastened to the heat pipe heatsink 1 through a thermal interface material, and closely attached to the surface of the heat pipe heatsink 1; the heating rod 8 is coated with thermal interface material and then inserted into the heating block 7, to be closely combined with the heating block 7. The heating power source is turned on, and an appropriate heating amount is set, to make the heating rod 8 heat up, the heat is transferred to the heat pipe 5 through the heating block 7 and the thermal interface material, and then transferred to the substrate 2 and the radiating fins 3 of the heat pipe heatsink 1; the cold air from the fan 11 flows through the heatsink 1 to take away the heat and transfer it to the outside; after the temperature is stabilized, the temperature of each point of the second temperature sensors 6 and the first temperature sensors 9 is recorded.

When the heat pipe fails (or be defective), the heat generated by the heating rod cannot be quickly transferred to the outside through the heat pipe under the heating rod, resulting in rising of the temperature detected by the first temperature sensor 9, and falling of the temperature detected by the second temperature sensor 6, and hence the temperature difference between the first temperature sensor 9 and the second temperature sensor 6 is increased. The threshold value of each temperature is obtained by testing the qualified and defective heatsinks, and then the standard can be set as follows: the temperature detected by the first temperature sensor 9 is less than a specified temperature (that is, the first preset temperature value mentioned above), the temperature detected by the second temperature sensor 6 is greater than a specified temperature (that is, the second preset temperature value mentioned above), the temperature difference between the temperature detected by the first temperature sensor 9 and the temperature detected by the second temperature sensor 6 is less than a specified temperature difference (that is, the preset temperature difference value mentioned above). When the temperature test results of each of the heat pipes 5 meet all the above standards at the same time, it is a qualified product, and if not, it is a defective product, and thus the products with poor heat dissipation performance can be screened out.

If the heat pipe heatsink is more complex and has multiple groups of heat pipes, determination of whether the heat dissipation performance of each heat pipe is qualified can be realized by comparing the temperature difference of the same heat pipe.

The above embodiments in this specification are described in a progressive manner. Each of the embodiments is mainly focused on describing its differences from other embodiments, and references may be made among these embodiments with respect to the same or similar portions among these embodiments.

It should be understood that if "system", "device", "unit" and/or "module" are used, they are only for distinguishing different assemblies, elements, components, parts or fittings at different levels. However, if other words can achieve the same object, they may be replaced by other expressions.

As shown in the present application and the claims, the words "a", "one", "one type" and/or "this" do not specifically refer to the singular, but may also include the plural, unless the context clearly indicates exceptions. Generally, the terms "include" and "comprise" only indicate that the steps and elements that have been clearly identified are included, and these steps and elements do not constitute an exclusive list, the method or equipment may also contain other steps or elements. The statement "comprising a..." does not exclude the case that other identical elements exist in the process, method, product or device.

In the description of the embodiments of the present application, unless otherwise specified, "/" means or, for example, A/B can mean A or B; the "and/or" herein is only an association relationship that describes the associated objects, which means that there can be three kinds of relationships, for example, A and/or B means that there are three cases: A alone, both A and B, and B alone. In addition, in the description of the embodiments of the present application, "multiple" refers to two or more.

The terms "first", "second" and the like are only for purpose of description, and should not be interpreted as indicating or implying relative importance or implying the number of the indicated technical features. Therefore, the features defined by "first" and "second" may explicitly or implicitly include one or more of the features.

If a flowchart is used in the present application, the flowchart is used to explain the operation performed by the system according to the embodiment of the present application. It should be understood that the preceding or subsequent operations are not necessarily performed accurately in sequence. Instead, the steps can be processed in reverse order or simultaneously. In addition, other operations can be added to these procedures, or one or more operations can be removed from these procedures

The principle and embodiments of the present application are described through specific examples herein. The description of the above embodiments is merely used to facilitate understanding the core concept of the present application. It should be noted that, for those skilled in the art, various improvements and modifications may be further made to the present application without departing from the principle of the present application, and these improvements and modifications also fall within the protection scope defined by the claims of the present application.

## Claims

1. A performance testing device for a heat pipe heatsink, comprising:
a heating simulation assembly configured to simulate heat generation of a heating element, wherein the heating simulation assembly has a heat conduction end face configured to be fitted to and transfer heat with evaporation pipe sections of heat pipes (5) of the heat pipe heatsink (1);
first temperature sensors (9) configured to detect a temperature of the heat conduction end face, wherein the first temperature sensors (9) are arranged in one-to-one correspondence with the evaporation pipe sections of the heat pipes (5); and
second temperature sensors (6), wherein the second temperature sensors (6) are arranged at condensing pipe sections (5) of the heat pipes (5).

2. The performance testing device according to claim 1, wherein the heating simulation assembly comprises a heating block (7) and heating rods (8) embedded in the heating block (7), a side of the heating block (7) configured to be fitted to and transfer heat with the evaporation pipe sections forms the heat conduction end face, and the heating rods (8) are configured to heat the heating block (7), to allow the heating block (7) to simulate the heat generation of the heating element.

3. The performance testing device according to claim 2, wherein a thermal interface material coating is formed in an embedding gap between each of the heating rods (8) and the heating block (7).

4. The performance testing device of heat pipe heatsink according to claim 2, wherein the heating rods (8) and the evaporation pipe sections of the heat pipes (5) are in one-to-one correspondence and arranged in parallel.

5. The performance testing device according to claim 4, wherein each of the first temperature sensors (9) is embedded in the heating block (7) and located between a corresponding heating rod (8) of the heating rods (8) and the heat conduction end face.

6. The performance testing device according to claim 4, wherein the heating block (7) is of an integrated structure and is configured to match the size of the heating element, and a heat insulation structure is provided between each two adjacent heating rods (8).

7. The performance testing device according to claim 6, wherein the heat insulation structure is a heat insulation groove (10) or a heat insulation material layer.

8. The performance testing device according to claim 4, wherein the heating block (7) is of a split-type structure, the heating block (7) comprises sub-heating blocks arranged in one-to-one correspondence with the evaporation pipe sections, the heating rods (8) are arranged in the corresponding sub-heating blocks, a preset heat insulation gap is kept between each two adjacent sub-heating blocks.

9. The performance testing device according to claim 1, wherein the heat conduction end face and/or a heat pipe mounting end face of the heat pipe heatsink (1) is provided with a thermal interface material coating.

10. The performance testing device according to claim 1, further comprising an air-cooling simulation system configured for simulating an air-cooling environment of the heat pipe heatsink (1).

11. The performance testing device according to claim 10, wherein
the air-cooling simulation system comprises a fan (11) and an air duct cavity (12) for blowing cold airflow from the fan (11) to the heat pipe heatsink (1); or,
the air-cooling simulation system is an air tunnel for providing cold airflow to the heat pipe heatsink (1).

12. The performance testing device according to claim 1, wherein each of the evaporation pipe sections is located at a middle of the corresponding heat pipe (5), each of the condensing pipe sections is located at each of two ends of the heat pipe (5), and each of the second temperature sensors (6) is arranged at a preset distance from the corresponding end of the heat pipe (5).
